# EUROPÄISCHE PATENTSCHRIFT

(11) **EP 0 453 737 B1**
(45) Veröffentlichungstag und Bekanntmachung des Hinweises auf die Patenterteilung: **08.01.1997**
(21) Anmeldenummer: 91103337.1
(22) Anmeldetag: 05.03.1991
(51) Int. Cl.: G06K 19/00, G01R 1/073

(54) **Prüfkopf für Wertkarten mit eingelagertem Halbleiterchip**
Probe for a credit card with moulded semiconductor chip
Probe pour cartes de crédit avec puce semi-conductrice incorporée

(30) Priorität: 07.03.1990 DE 4007221
(43) Veröffentlichungstag der Anmeldung: 30.10.1991
(73) Patentinhaber: GAO Gesellschaft für Automation und Organisation mbH, 81307 München (DE)
(72) Erfinder: Haghiri-Tehrani, Yahya, W-8000 München 40 (DE)
(74) Vertreter: Klunker . Schmitt-Nilson . Hirsch

(56) Entgegenhaltungen:
- EP-A- 0 355 273
- DE-A- 0 344 654
- DE-A- 3 639 630

## Beschreibung

Die Erfindung betrifft einen Prüfkopf nach dem Oberbegriff des Patentanspruchs 1, die Verwendung eines derartigen Prüfkopfs für die Feststellung der tatsächlichen Lage von Kontaktflächen bezogen auf die Soll-Position gemäß einem internationalen Standard, ferner ein Verfahren zur Herstellung von sogenannten Minichipkarten, für die sich in der Fachwelt die Bezeichnung plug-in SIM eingebürgert hat, ausgehend von einer Chipkarte nach internationalem Standard, für die sich in der Fachwelt die Bezeichnung IC-Karte eingebürgert hat. Ferner betrifft die Erfindung eine Vorrichtung zur Durchführung des genannten Verfahrens und eine Wertkarte, deren Außenabmessungen und Kontaktflächen dem internationalen Standard ISO 7816/2 entsprechen.

Unter Chipkarten im nachfolgend gebrauchten Sinn sollen Karten verstanden werden, in die mindestens ein Halbleiterchip eingebettet ist. Derartige Karten sind in diversen Ausführungsformen bekannt, sie sind dazu bestimmt, mit Endgeräten, wie Geld- oder Warenausgabeautomaten, Kartentelephonen, Zugangskontrollgeräten od.dgl. zu kommunizieren, wobei der im Halbleiterchip integrierte Schaltkreis über elektrische Kontakte aktiviert wird, die sich in dem Endgerät befinden. Da Endgeräte verschiedener Hersteller mit Karten ebenfalls verschiedener Hersteller kompatibel sein sollen, wurden sowohl die äußeren Abmessungen einer solchen Chipkarte, als auch die Größe und Position der Kontaktflächen bezogen auf die Außenkanten einer solchen Chipkarte genormt. Die äußeren Abmessungen der Karte sind international durch die Norm ISO 7810 und die Größe und Position der Kontaktflächen des Halbleiterchips international durch die Norm ISO 7816/2 genormt.

Beim Einschieben einer Chipkarte in ein Endgerät werden die Außenkanten der Karte durch bestimmte im Gerät befindliche Anschläge in eine bestimmte Position gebracht, in welcher die geräteseitigen Kontakte mit den Kontaktflächen der Karte in Berührung gebracht werden. Die Kontaktierung ist nur dann erfolgreich, wenn die Position der Kontakte innerhalb des Toleranzfensters liegt, das durch die Norm vorgegeben ist.

Eine solche Karte, die dem internationalen Standard ISO 7816/2 entspricht, wird nachfolgend als Normkarte bezeichnet.

Die Chipkarten werden normalerweise aus Mehrnutzenbogen oder Streifen ausgestanzt, wobei die Stanzwerkzeuge an Markierungen ausgerichtet werden, welche wiederum eine bestimmte definierte Lage zu den Kontakfflächen haben. Im Ergebnis müssen die Außenkanten der gestanzten Karten eine solche Lage zu den Kontakfflächen aufweisen, daß das durch die Norm definierte Toleranzfenster für die Kontakfflächen innerhalb der tatsächlich vorliegenden Kontakfflächen liegt.

Die Genauigkeit der verwendeten Stanzwerkzeuge ist auf die zur Verfügung stehenden Toleranzbereiche abgestimmt, so daß es beispielsweise nicht möglich ist, eine bereits fertig gestanzte Normkarte unter Verwendung einer Bezugskante dieser Karte nochmals zu stanzen. In einem solchen Falle würden sich die zwangsläufig auftretenden Positionierfehler im ungünstigsten Fall überlagern und einen Wert ergeben, der außerhalb des akzeptierbaren Toleranzrahmens liegt. Es besteht daher ein Bedürfnis dafür, einen Mehmutzenbogen, Streifen oder auch eine bereits vorgestanzte Karte ausgehend von den Kontaktflächen exakt zu positionieren bzw. die tatsächliche Lage der Kontaktflächen in Bezug zu einem vorgegebenen Toleranzfenster festzustellen. Diese Lagefeststellung bzw. Positionierung soll mit einem Gerät erfolgen, das einfach und kompakt aufgebaut ist, zuverlässig arbeitet und leicht zu bedienen ist.

Erfindungsgemäß wird diese Aufgabe durch einen Prüfkopf gelöst, welcher die im Kennzeichen des Anspuchs 1 angegebenen Merkmale aufweist. Der Prüfkopf arbeitet mit dem Prinzip einer galvanischen Abtastung der Grenzen bzw. Außenkanten der durch die Norm vorgegebenen Toleranzfenster. Gemessen wird jeweils der Stromfluß zwischen einem beispielsweise in der Mitte des Toleranzfensters angeordneten Kontaktstift und Kontaktstiften, welche am Rand des durch die Norm bestimmten Toleranzfensters angeordnet sind.

Unter bestimmten Bedingungen kann es ausreichen, nur eine Kontaktfläche auszumessen und von der richtigen Lage dieser Kontaktfläche auf die korrekte Lage der anderen Kontaktflächen zu schließen. Es sind jedoch Ausführungsformen bevorzugt, bei denen mehrere Kontaktflächen gleichzeitig ausgemessen werden, um Winkelversatzfehler mit Sicherheit auszuschließen. Beim Kontaktflächenbild nach der Norm ISO 7816/2 werden vorzugsweise die Kontakte C6 und C8 vermessen.

Weitere bauliche Einzelheiten des Prüfkopfs, insbesondere mögliche Anordnungen der Kontaktstifte sind in den Unteransprüchen bezeichnet.

Der erfindungsgemäße Prüfkopf hat insbesondere gegenüber bekannten optischen Lagebestimmungssystemen den Vorteil der Einfachheit und Robustheit.

Der erfindungsgemäße Prüfkopf kann daher besonders vorteilhaft bei der Qualitätskontrolle von Normkarten eingesetzt werden, d.h. zur Feststellung der Lage der Kontaktflächen von Normkarten hinsichtlich ihrer Übereinstimmung mit dem durch die Norm vorgegebenen Toleranzfenster. Der Prüfkopf kann jedoch auch zur Positionierung von Karten oder von Trägern mit eingelagerten Halbleiterchips für eine Bearbeitung, insbesondere Stanzung, verwendet werden. Dieses Problem stellt sich besonders bei der Herstellung von Chipkarten, die sehr viel kleiner sind, als die durch den Standard ISO 7810 hinsichtlich ihrer äußeren Abmessungen genormten Chipkarten.

Die momentane stürmische Entwicklung auf dem einschlägigen Gebiet und insbesondere Miniaturisierung der Endgeräte macht es erforderlich, Wertkarten einzusetzen, die sehr viel kleiner sind, als die bisher gebräuchlichen Normkarten. Insbesondere für Mobiltelephone hat sich die sogenannte Minichipkarte durchgesetzt, die gegenüber einer Wertkarte mit internationaler Normung der Außenabmessungen wesentlich kleiner ist, deren Kontaktflächenbild aber dem der Norm karte entspricht.

In der gegenwärtigen Phase der Einführung der Minichipkarte sind die Herstellungs- und insbesondere die Personalisierungseinrichtungen für Chipkarten mit eingelagerten Halbleiterchips ausnahmslos auf das Normformat nach ISO 7810 ausgerichtet, eine Personalisierung der wesentlich kleineren Minichipkarten ist daher mit herkömmlichen Einrichtungen nicht möglich. Die verschiedenen, am Markt befindlichen Endgeräte bedingen darüberhinaus eine Lagerhaltung sowohl von Normkarten, als auch von Minichipkarten.

Zur Lösung der aufgezeigten Problematik wäre es vorteilhaft, wenn man ausgehend von einer Normkarte, die Minichipkarte erst als quasi letzten Herstellungsschritt aus der Norm karte ausstanzen könnte. Dies ist jedoch deshalb schwierig, weil man sich beim Ausstanzen der Minichipkarte an den Außenkanten der Normkarte als Referenzkante orientieren mußte. Die Außenkanten von Normkarten liegen jedoch hinsichtlich der Position der Kontaktflächen bereits innerhalb eines bestimmten Toleranzbereichs, so daß sich im ungünstigsten Fall die Stanztoleranzen addieren würden.

Erfindungsgemäß wird daher ein Träger mit eingelagertem Halbleiterchip bzw. dessen Kontaktflächen unter Verwendung des bereits beschriebenen Prüfkopfes relativ zu einem Stanzwerkzeug justiert, d.h. die Positionierung geht nicht von den Außenkanten aus. Bei der nachfolgenden Stanzung werden die Außenkanten der Norm karte gestanzt und gleichzeitig die Außenkanten der Minichipkarte, diese allerdings nicht vollständig, sondern derart, daß die Minichipkarte über kleine, leicht durchtrennbare Stege mit der Normkarte verbunden bleibt. Die Stege sind dabei so angeordnet. daß sie an Stellen der Außenkanten der Minikarte sitzen. die nicht als Referenzpunkte für eine spätere Kontaktierung der Minicnipkarte in Frage kommen. Üblicherweise werden zwei Referenzpunkte an einer Längskante und ein Referenzpunkt an der kürzeren Querkante ausgewählt, um die Normkarte bzw. auch die Minichipkarte im Endgerät lagerichtig für eine Kontaktierung durch die geräteseitigen Kontakte zu positionieren.

Der Halbleiterchip wird nach der Stanzung unter Verwendung herkömmlicher Einrichtungen und Geräte geladen bzw. personalisiert, d.h. während dieser Zeit bleibt die Minichipkarte noch mit der Normkarte verbunden. Wird vom Endbenutzer nicht die Normkarte, sondern die Minichipkarte benötigt, wird diese Minichipkarte aus der Normkarte herausgedrückt oder auch ausgestanzt, indem die Stegbereiche durch einen Rundstempel ausgestanzt werden. Da sich die Stegbereiche außerhalb der Referenzstellen der Kanten befinden, spielt es keine Rolle, wenn die Außenkanten nach Wegstanzung des Stegbereichs eine beispielsweise konkave Einbuchtung aufweisen.

Das beschriebene Verfahren eignet sich insbesondere dazu, aus bereits vorgestanzten Normkarten Minichipkarten auszustanzen. Wie schon beschrieben, kommt eine Positionierung der Normkarten durch mit den Außenkanten zusammenwirkende Anschläge nicht in Frage. Man benutzt vielmehr den erfindungsgemäßen Prüfkopf, um die Karte in eine Referenzlage hinsichtlich der Kontaktflächen zu bringen. Die erneute Stanzung erfolgt dann bezogen auf die Ist-Lage der Kontaktflächen und nicht bezogen auf die Ist-Lage der Außenkanten der Normkarte, die möglicherweise bereits am Rande eines vorgegebenen Toleranzbereichs liegen. Die Minichipkarte braucht nicht völlig aus der Normkarte herausgestanzt zu werden, sie kann vielmehr über zwei oder mehr später entfernbare Stege mit der Normkarte verbunden bleiben. Die Karte kann daher entweder als Normkarte mit den entsprechenden größeren Abmessungen verwendet werden, bei Bedarf kann aber auch die Minichipkarte aus der Norm karte herausgetrennt werden. Das Herausdrücken bzw. Herausstanzen der Minichipkarte aus der Normkarte ist ein irreversibler Vorgang, die Karte kann mit der Normkarte nachträglich nicht wieder vereinigt werden.

Es ist bereits eine Chipkarte bekannt. bei der der Halbleiterchip auf einem Einsteckteil angeordnet ist. das wesentlich kleinere Abmessungen hat, als die Normkarte. Die Randbereiche des Einsteckteils und die damit zusammenwirkenden Randbereiche der Normkarte sind jedoch so ausgebildet, daß sie Rastmittel aufweisen, so daß das Einsteckteil wahlweise entweder allein oder auch verbunden mit der Norm karte verwendet werden kann. Diese besondere Profilierung der miteinander in Eingriff stehenden Kantenbereiche macht eine völlig getrennte Herstellung des Einsteckteils einerseits und der Norm karte andererseits erforderlich. Der erfindungsgemäß angestrebte Effekt, nämlich ausgehend von einer Normkarte eine Minichipkarte herzustellen, wird daher durch diese bekannte Chipkarte gerade nicht erreicht (DE-PS 38 04 361).

Es ist eine weitere Chipkarte bekannt, bei welcher der Bereich der Karte, in dem sich der Halbleiterchip befindet. durch eine Sollbruchlinie vom übrigen Kartenbereich getrennt ist. Die Sollbruchlinie soll eine Übertragung von Spannungen auf den Halbleiterchip verhindern, wenn die Karte im Gebrauch Verdrehungen oder Verbiegungen ausgesetzt wird. Ein Abtrennen des den Halbleiterchip tragenden Bereichs und eine Verwendung dieses Bereichs als Minichipkarte mit bestimmten standardisierten Abmessungen ist nicht möglich und nicht beabsichtigt (DE-OS 34 20 051).

Die Vorteile der Erfindung gegenüber dem vorerwähnten Stand der Technik liegen insbesondere darin, daß die Lagerhaltung bei der Verkaufsorganisation reduziert werden kann, da den Kunden wahlweise Karten mit den äußeren Abmessungen gemäß der Norm ISO 7810 oder auch die Minichipkarten angeboten werden können. Das Heraustrennen der Minichipkarten aus den Normkarten kann auch bei der Verkaufsorganisation mit einfachsten Mitteln erfolgen. Ein weiterer Vorteil liegt darin, daß die Minichipkarten unter Verwendung herkömmlicher Personalisierungs- und Beschriftungsgeräten hergestellt werden können, da ihr Format erst in einem letzten Verfahrensschritt verkleinert wird. Alle vorangehenden Bearbeitungsschritte, wie beispielsweise das Beschriften der Karte und Laden des Halbleiterchips mit den teilnehmerund personenbezogenen Daten können unter Verwendung herkömmlicher Einrichtungen erfolgen.

Nachfolgend werden Ausführungsformen der Erfindung unter Bezugnahme auf die beigefügte Zeichnung beispielsweise beschrieben. Darin zeigen:
Fig. 1
   das Kontaktbild einer Normkarte gemäß ISO 7816/2;
Fig. 2a - 2d
   Anordnungen von Kontaktstiften eines Prüfkopfes zur Feststellung der Lage der Kontaktflächen;
Fig. 3
   einen schematischen Querschnitt durch einen Prüfkopf, der die Kontaktflächen C2 und C6 beaufschlagt:
Fig. 4a und 4b
   einen Querschnitt durch eine Stanzvorrichtung und eine Draufsicht auf eine in der Stanzvorrichtung fixierte Karte;
Fig. 5
   eine Draufsicht auf eine Normkarte mit vorgestanzter Minichipkarte;
Fig. 6

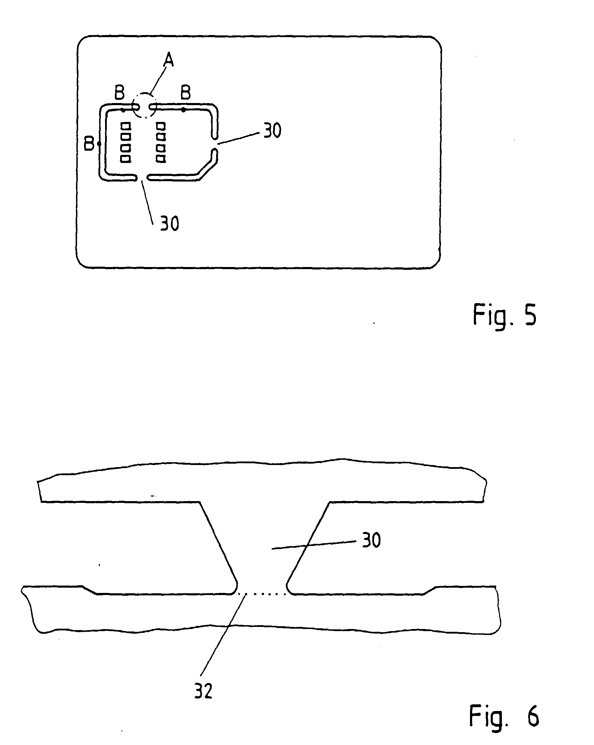

   die in Fig. 5 mit A bezeichnete Einzelheit. und
Fig. 7
   eine vorgestanzte Minichipkarte mit schraffiert bezeichneten Stegbereichen.

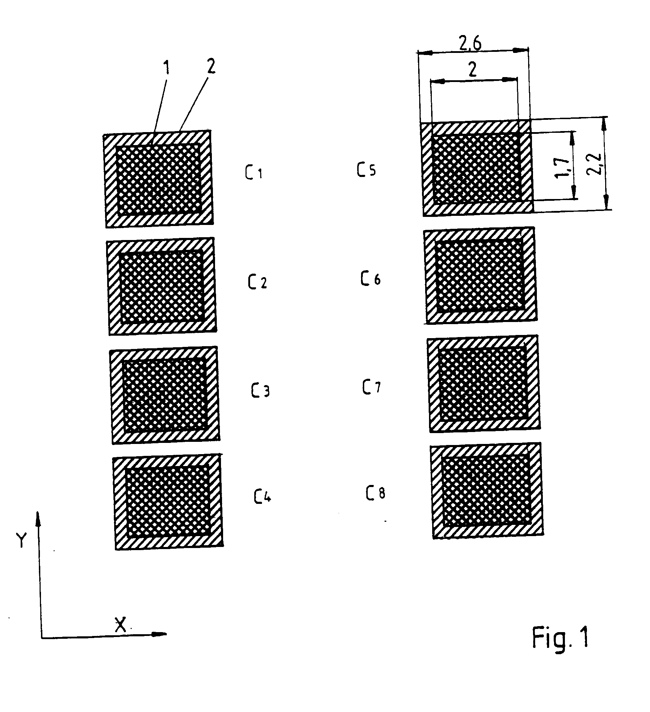

Fig. 1 zeigt schematisch und nicht maßstäblich das Kontakfflächenbild einer Normkarte mit acht in zwei parallelen Reihen angeordneten Kontakten. Die Kontakte haben die folgende Bedeutung: Über den Kontakt C1 wird die Betriebsspannung von üblicherweise 5 Volt zugeführt, Kontakt C2 dient der Zuführung eines Rücksetzungssignals, über C3 wird ein Taktsignal eingespeist, C4 ist für zukünftige Verwendungen reserviert und ist i.d.R. mit dem Halbleiterchip nicht verbunden, C5 liegt auf der Spannung 0, über C6 kann die Programmierspannung in einer Größenordnung von ca. 25 Volt zugeführt werden, C7 dient der Datenein- und Datenausgabe und C8 ist für zukünftige Anwendungen reserviert.

In der Figur 1 ist mit der Bezugsziffer 1 die Soll-Kontaktfläche (1,7 x 2,0 mm) laut dem Standard ISO 7816/2 angegeben, Bezugsziffer 2 bezeichnet ein Beispiel für das Ist-Maß der Kontaktflächen (2,2 x 2,6 mm). Außer der Mindestgröße der Kontaktflächen legt der Standard die Kontaktflächenfelder hinsichtlich ihrer Abstände von den Außenkanten der Karte fest, da diese Außenkanten als Bezugskanten für eine spätere Positionierung der Karte im Endgerät dienen. Zur Kompensation von Stanztoleranzen sind die Ist-Maße der Kontaktflächen größer als die Soll-Maße. Bei dem in Fig. 1 gezeigten Fall sind alle Soll-Flächen zentrisch zu den Ist-Flächen angeordnet, was Positioniertoleranzen von +-0 bedeuten würde. Praktisch würde ein solcher Fall aber kaum auftreten. Im gezeigten Fall wären Positioniertoleranzen in X-Richtung von +- 0,3 und in Y-Richtung von +-0,25 möglich. Im Grenzfall kämen daher zwei Kanten eines Soll-Fensters mit einer Ist-Kontaktfläche zur Deckung. Ragt ein Soll-Bereich 1 aus einem Ist-Bereich 2 hinaus, so stellt dies einen unzulässigen Fall dar, der als Ausschuß gewertet werden muß.

Die gemäß der Norm vorgesehenen Kontaktflächen sind nicht in jedem Fall vorhanden, beispielsweise fehlen die für zukünftige Verwendungen vorgesehenen Kontaktflächen C4 und C8 bei manchen Ausführungsformen. Vorteilhaft ist daher insbesondere eine Überprüfung der Kontakte C6 und C2, Kontakt C6 aus dem Grund, da die Programmierspannung von 25 Volt häufig aus der Betriebsspannung (Kontakt C1) abgeleitet wird und der Kontakt C6 daher mit dem Chip überhaupt nicht verbunden ist. Bei einer Überprüfung des Kontakts C6 besteht daher keine Gefahr eines unerwünschten Stromflusses durch den Chip.

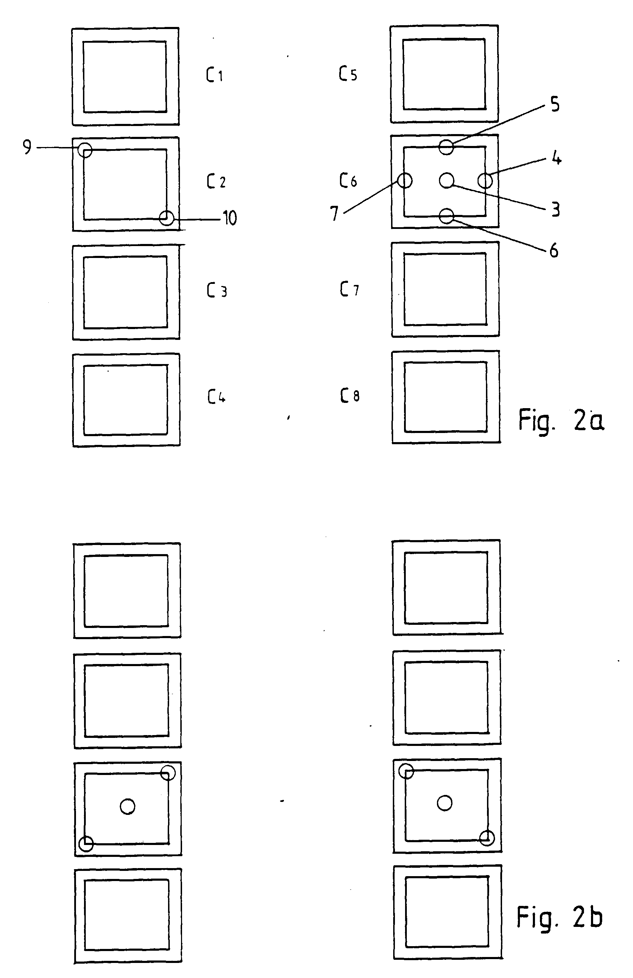

In den Fig. 2a - d sind verschiedene Kontaktanordnungen dargestellt. mit denen eine Prüfung von Kontakfflächen möglich ist.

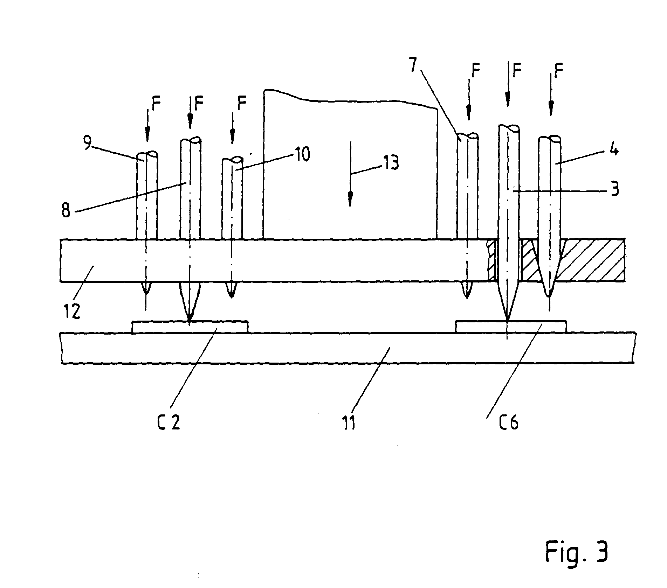

Der Prüfkopf, der in Fig. 3 schematisch dargestellt ist, weist eine aus einem elektrisch isolierenden Material bestehende Platte 12 auf, in der federnde Kontaktstifte 3 bis 10 geführt sind. Bei Überprüfung eines Kontaktflächenfeldes gemäß ISO 7816/2 können die Kontaktstifte so angeordnet sein, daß die Kontaktstifte 3 bis 7 das Kontaktfeld C6 und die Kontaktstifte 8 bis 10 das Kontaktfeld C2 beaufschlagen (Fig. 2a).

Die Platte 12 des Prüfkopfes ist an einem Hubteil 13 befestigt, mit dem der gesamte Prüfkopf auf das zu prüfende Kontaktfeld zugefahren bzw. von ihm entfernt werden kann. Die federnde Lagerung der Kontaktstifte, die die Kontaktstifte mit der Kraft F elastisch vorspannt, ist nicht gezeigt, für den Fachmann gibt es jedoch eine Reihe von Möglichkeiten, eine solche Lagerung auszubilden. Ebenso ist der eigentliche Meßkreis der Vorrichtung nicht gezeigt, gemessen werden jeweils die Ströme, die zwischen dem Mittenkontakt 3 bzw. 8 und den Randkontakten 5, 6, 7 bzw. 9 und 10 fließen. Derartige Meßkreise sind dem Fachmann geläufig und werden daher nicht gesondert dargestellt.

Fließen, nach vorgenommener Kontaktierung, zwischen den Kontaktpaaren 3-4, 3-5, 3-6 und 3-7 jeweils Meßströme, sind alle vier Kreise geschlossen und die Position des Kontaktes C6 korrekt.

Unter Umständen reicht es aus, lediglich den Kontakt C6 zu vermessen, wenn nämlich die Ist-Maße des Kontaktes C6 kleiner oder gleich dem Ist-Maß aller anderen Kontakte sind, wenn weiterhin die Kontaktmittenabstände nur unwesentlich vom theoretischen Wert abweichen, wenn die Winkelabweichung der Kontaktbildachsen von den theoretischen Achsen gering ist und wenn schließlich der Absand der Kontaktstifte 7 und 4 bzw. 5 und 6 um einen solchen Betrag größer ist. als das durch die ISO-Norm vorgegebene Toleranzfenster, das die zwangsläufig doch auftretenden Unterschiede hinsichtlich der Kontaktmittenabstände und der Winkelabweichung der Kontaktbildachsen dadurch kompensiert werden. Diese Bedingungen sind häufig dadurch sichergestellt, daß alle Kontakte in einem Arbeitsgang erzeugt bzw. geätzt werden.

Sicherer ist jedoch eine zusätzliche Prüfung der Position von Kontakt C2 durch die Kontaktstifte 8-9 und 8-10. Darüberhinaus sind weitere Kombinationen von Kontaktstiften bis zu vier Stiften pro Kontakt möglich (vgl. die in Fig. 2b. 2c und 2d angegebenen Konfigurationen). Durch eine entsprechende Analyse der Prüfergebnisse können beliebige Kontaktlayouts auf ihre Übereinstimmung mit den Toleranzfeldern überprüft werden, die durch die Norm vorgegeben werden.

Für den Fall, daß nur eine oder wenige Kontaktflächen überprüft werden sollen, hat es sich als vorteilhaft erwiesen, zunächst den Kontakt C6 für eine Überprüfung zu verwenden, da dieser Kontakt bei den neueren Halbleiterchips nicht mehr mit dem Chip verbunden ist, da die Programmierspannung von 25 Volt über die Betriebsspannung von 5 Volt (C1) generiert wird.

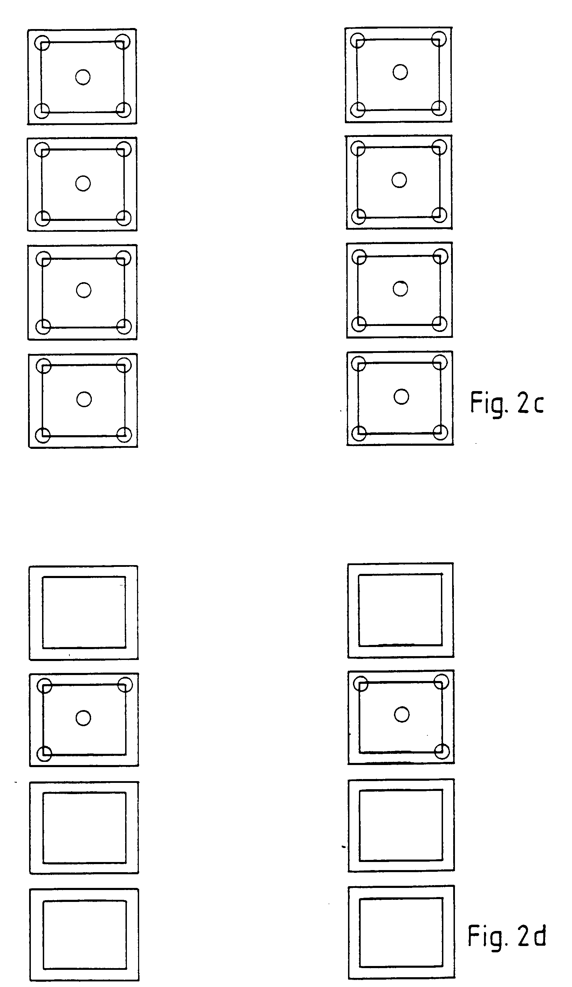

Sämtliche der in den Fig. 1 und 2 gezeigten Konfigurationen stellen einen Idealfall dar. bei dem die Kontaktflächen exakt zentrisch über dem vorgegebenen minimalen Kontaktflächenbild angeordnet ist. Tatsächlich wird diese Situation nur selten auftreten, bei den in Fig. 1 für das Feld C5 vorgegebenen Größenverhältnissen von normiertem Kontaktfeld und tatsächlich verwendeter Kontaktflächengröße ergibt sich eine Positioniertoleranz in X-Richtung von +-0,3 mm und in Y-Richtung von +- 0,25 mm.

Vorzugsweise wird der beschriebene Prüfkopf in einer Stanzvorrichtung zum Stanzen von sogenannten Minichipkarten eingesetzt.

Eine allgemein verbindliche internationale Norm für diese Minichipkarten existiert z.Z. noch nicht, allerdings wird die Minichipkarte, deren Umrisse in Fig. 5 gezeigt sind, analog dem internationalen Standard ISO 7816/2 vermaßt. Das bedeutet, daß drei Bezugspunkte B an den Außenkanten der Karte bestimmte Abstände zum Kontaktflächenfeld aufweisen müssen. Die nochmalige Stanzung einer bereits vorgestanzten Normkarte führt daher zu nicht tolerierbaren Abweichungen, wenn die vorgestanzte Karte über mit ihren Außenkanten zusammenwirkende Anschläge positioniert wird.

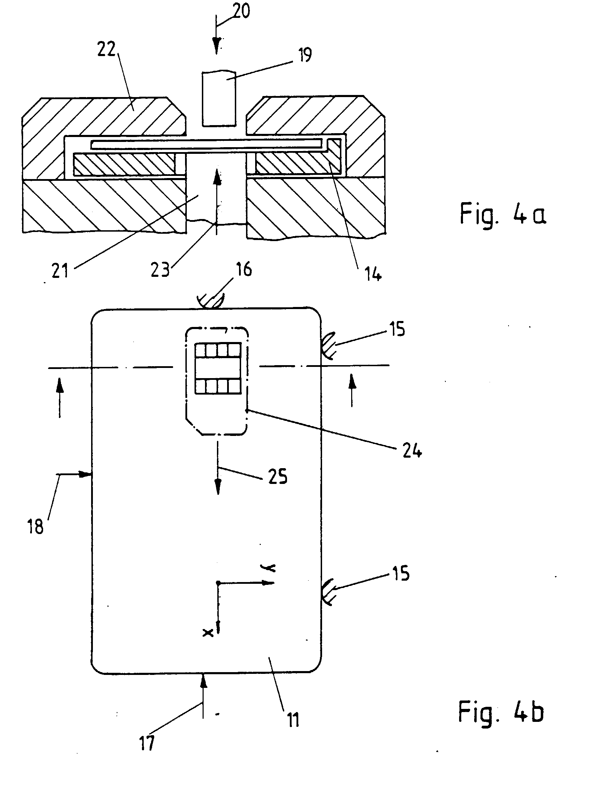

Es ist jedoch möglich, die Normkarte zunächst mit dem Prüfkopf so zu positionieren, daß das Kontaktflächenbild mit dem Toleranzfenster der ISO-Norm übereinstimmt. Zu diesem Zweck wird die Karte 11 (Fig. 4b) in einem Schlitten 14 mittels Anschlägen 14, 15 und 16 positioniert. Der Schlitten 14 ist in X- und Y-Richtung verschiebbar, beispielsweise über Stellmotoren und wird so justiert, bis sich das (im Idealfall) in den Fig. 1 und 2 gezeigte Kontaktbild ergibt, d.h. bis alle zugeordneten Paare von Kontaktstiften einen Stromfluß anzeigen. In dieser Position wird der Schlitten 14 mit der darauf festgespannten Karte fixiert. der Prüfkopf 19 wird aus der Stanzvorrichtung entfernt und ein Stanzstempel 23 fährt durch den Schlitten 14 hindurch gegen die Karte 11 und stanzt im Zusammenwirken mit der Matrize 22 die Minichipkarte lagegerecht aus der Normkarte aus. Die Minichipkarte 24 kann in Richtung des Pfeils 25 entnommen werden, worauf der Stanzstempel 23 wieder zurückfährt und die Karte H aus der Vorrichtung entnommen werden kann (Fig. 4a).

Eine vollständige Ausstanzung der Minichipkarte ist nicht unbedingt erforderlich, vielmehr ist es sinnvoll. Stegbereiche 30 nicht auszustanzen, wobei diese Stegbereiche jedoch so ausgebildet sein sollen, daß sie entweder leicht ausbrechbar oder jedenfalls leicht ausstanzbar sind. In Fig. 6 ist ein besonders ausgebildeter Stegbereich 30 in vergrößerter Darstellung gezeigt. Die Sollbruchstelle ist dabei mit einem Laserstrahl entlang einer Naht 32 perforiert, so daß ein leichtes Lösen des Stegs möglich ist. ohne daß die Außenkontur der Minichipkarte durch stehenbleibende Stegbereiche verfälscht würde.

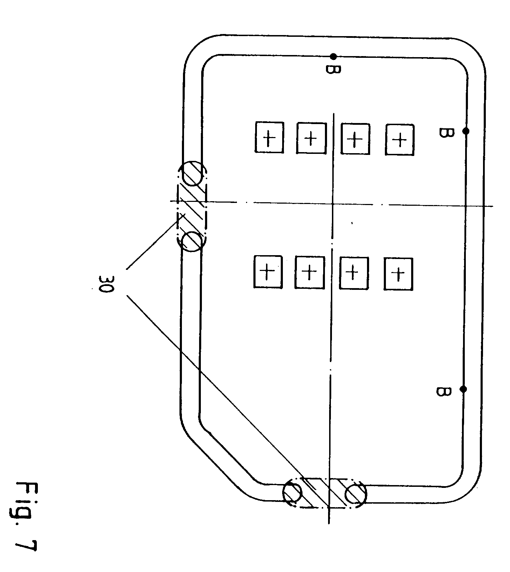

Ein Ausstanzen der Minichipkarte kann jedoch auch wie in Fig. 7 durch das Ausstanzen der schraffierten Bereiche 30 erfolgen. Eine konkave Einbuchtung der Außenkante der Minichipkarte an der Stelle der früheren Stege hat keine Auswirkung auf die korrekte Lage der Referenzpunkte B zu den Kontaktflächen.

Das Ausstanzen bzw. Durchtrennen der Stegbereiche 30, welche die Minichipkarte mit der Normkarte verbinden, kann zu jedem beliebigen Zeitpunkt, vorzugsweise dann erfolgen, wenn sich entscheidet, ob der Kunde eine Normkarte oder Minichipkarte benötigt. Ein Laden der Minichipkarte mit den benutzerkreis- bzw. personenbezogenen Daten, sowie ein Beschriften und sämtliche anderen Herstellungsvorgänge können erfolgen, bevor dieses endgültige Abtrennen der Minichipkarte aus der Normkarte vorgenommen wird, wobei sämtliche bisher für Normkarten entwickelten Einrichtungen und Geräte Verwendung finden können.

## Patentansprüche

1. Prüfkopf zur Feststellung der Lage der Kontaktflächen einer Chipkarte mit eingelagertem Halbleiterchip, auf ihre Übereinstimmung mit einem von einem Standard, insbesondere der internationalen Norm ISO 7816/2, definierten Toleranzfensters,
**gekennzeichnet** durch eine Platte (12) aus elektrisch isolierendem Material, in der elektrisch leitende Kontaktstifte (3 - 10) derart angeordnet sind, daß sie mit ihren Spitzen wenigstens zwei Punkte wenigstens einer Kontaktfläche (C1 - C8) berühren, wobei wenigstens einer der Berührungspunkte im Randbereich des Toleranzfensters gemäß dem Standard liegen, so daß eine an die Kontaktstifte (3 - 10) angelegte Prüfspannung einen Stromfluß zwischen den Kontaktstiften anzeigt, wenn die Spitzen der Kontaktstifte auf der zu prüfenden Kontaktfläche aufsitzen.

2. Prüfkopf nach Anspruch 1,
dadurch **gekennzeichnet,** daß die Kontaktstifte (3 - 10) federnd in der Platte geführt sind.

3. Prüfkopf nach einem der Ansprüche 1 bis 2,
dadurch **gekennzeichnet,** daß die Anordnung der Kontaktstifte (3 - 10) derart ist, daß die Mitte und zwei gegenüberliegende Kanten oder Ecken prüfbar sind.

4. Prüfkopf nach Anspruch 3,
dadurch **gekennzeichnet,** daß die Kontaktstifte (3 - 10) entlang einer geraden Linie angeordnet sind.

5. Prüfkopf nach einem der Ansprüche 1 bis 2,
dadurch **gekennzeichnet,** daß die Anordnung der Kontaktstifte (3 - 10) derart ist, daß drei Ecken und die Mitte jeweils einer Kontaktfläche prüfbar sind.

6. Prüfkopf nach einem der Ansprüche 1 bis 2,
dadurch **gekennzeichnet,** daß die Anordnung der Kontaktstifte (3 - 10) derart ist, daß vier Ecken und die Mitte jeweils einer Kontaktfläche prüfbar sind.

7. Prüfkopf nach einem der Ansprüche 1 bis 6,
dadurch **gekennzeichnet,** daß die Anordnung der Kontaktstifte (3 - 10) derart ist, daß zwei oder mehr Kontaktflächen gleichzeitig mit den Kontaktstiften prüfbar sind.

8. Prüfkopf nach Anspruch 7,
dadurch **gekennzeichnet,** daß die Anordnung der Kontaktstifte derart ist, daß gleichzeitig alle acht Kontaktflächen gemäß der Norm ISO 7816/2 überprüfbar sind.

9. Verwendung des Prüfkopfes gemäß einem der Ansprüche 1 bis 8 zur Feststellung der Lage von Kontaktflächen auf ihre Übereinstimmung mit einem von einem Standard, insbesondere der Norm ISO 7816/2, vorgegebenen Toleranzfenster.

10. Verwendung eines Prüfkopfes gemäß einem der Ansprüche 1 bis 8 zur Positionierung der Kontaktflächen eines in einem Träger eingebetteten Halbleiterchips zur maßgenauen Weiterverarbeitung, insbesondere Stanzung der Außenkanten, des Trägers.

11. Verfahren zur Herstellung einer Normkarte mit eingelagertem Halbleiterchip, dessen Kontaktflächen einen, innerhalb bestimmter Toleranzen, genauen Abstand zu den Außenkanten der Karte aufweisen, dadurch **gekennzeichet,** daß die Kontaktflächen des in einem Trägermaterial eingebetteten Halbleiterchip mittels des Prüfkopfes nach einem der Ansprüche 1 - 8 relativ zu einem Stanzwerkzeug derart einjustiert werden, daß sie einen definierten Abstand zu den Schneiden des Stanzwerkzeugs haben und daß die Stanzung der Normkarte in dieser justierten Position des Trägermaterials durchgeführt wird.

12. Verfahren nach Anspruch 11, dadurch **gekennzeichet,** daß das Trägermaterial ein Mehrnutzenbogen oder Streifen ist.

13. Verfahren zur Herstellung einer Minichipkarte mit eingelagertem Halbleiterchip aus einer Normkarte, wobei die Position der Kontaktflächen zu wenigstens drei Bezugspunkten der Außenkanten der Minichipkarte innerhalb bestimmter Toleranzen genau definiert ist, dadurch **gekennzeichet,** daß die Kontaktflächen des in der Normkarte eingebetteten Halbleiterchips mittels des Prüfkopfes nach einem der Ansprüche 1 - 8 relativ zu einem Stanzwerkzeug derart justiert werden, daß sie einen definierten Abstand zu den Schneiden des Stanzwerkzeuges haben und daß die Stanzung der Minichipkarte in dieser justierten Position der Normkarte durchgeführt wird.

14. Verfahren zur Herstellung einer Minichipkarte nach Anspruch 13, dadurch **gekennzeichet,** daß die Stanzung nicht vollständig erfolgt, so daß die Minichipkarte über dünne, leicht entfernbare Stege mit der Normkarte verbunden bleibt.

15. Verfahren zur Herstellung einer Minichipkarte nach Anspruch 13, dadurch **gekennzeichet,** daß die Normkarte aus einem Trägermaterial ausgestanzt wird und daß gleichzeitig unter Beibehaltung der positionierten Lage des Trägermaterials zum Stanzwerkzeug die Kanten der Minichipkarte derart vorgestanzt werden, daß die Minichipkarte über dünne, leicht entfernbare Stege mit der Normkarte verbunden bleibt.

16. Verfahren zur Herstellung einer Minichipkarte nach einem der Ansprüche 14 oder 15, dadurch **gekennzeichet,** daß die Stege derart ausgestanzt werden, daß die Kontur der Kanten der Minichipkarte im Bereich der ausgestanzten Stege in etwa konkav ausgebildet ist.

17. Normkarte mit eingelagerter Minichipkarte und Kontaktflächen zur Kommunikation und Energieversorgung, wobei die Position der Kontaktflächen zu wenigstens drei Bezugspunkten der Außenkanten der Minichipkarte innerhalb bestimmter Toleranzen genau definiert ist, dadurch **gekennzeichet,** daß die Minichipkarte über wenigstens einen leicht durchtrennbaren, am Umfang der Minichipkarte befindlichen Stegbereich, der nicht im Bereich der Bezugspunkte liegt, mit der kantenparallelen, flächenmäßig größeren Normkarte verbunden ist, wobei die Position der Kontaktflächen zu den Außenkanten der Normkarte innerhalb des Toleranzfeldes liegt, das durch einen Standard, insbesondere die internationale Norm ISO 7816/2 definiert ist.

18. Normkarte nach Anspruch 17, dadurch **gekennzeichet,** daß der Stegbereich derart ausgebildet ist, daß er leicht ausbrechbar oder ausstanzbar ist.

19. Normkarte nach Anspruch 18, dadurch **gekennzeichet,** daß der Stegbereich eine Sollbruchstelle aufweist.

20. Normkarte nach Anspruch 19, dadurch **gekennzeichet,** daß die Sollbruchstelle eine mit einem Laserstrahl erzeugte Materialschwächung, insbesondere Perforation, ist.

21. Vorrichtung zur Herstellung einer Minichipkarte mäß dem Verfahren nach Anspruch 13,
dadurch **gekennzeichnet,** daß sie einen Schlitten (14) aufweist, in dem eine Normkarte (11) durch Anschläge (15, 16) positioniert, fixierbar ist, weiterhin mit einem Prüfkopf (19) mit Kontaktstiften zur Feststellung der Lage der Kontaktflächen gemäß einem der Ansprüche 1 bis 6, wobei die relative Stellung von Prüfkopf (19) und Schlitten (14) zweiachsig justierbar ist, weiterhin mit einer über dem Schlitten (14) angeordneten Matrize (22) und einem unterhalb des Schlittens (14) angeordneten Stanzstempel (23), dessen Position relativ zum Prüfkopf definiert ist und der eine Ausnehmung im Schlitten durchsetzen kann, wobei nach Justierung der Normkarte bzw. des Schlittens (14) gegenüber der Matrize (22) der Prüfkopf (19) zurückfahrbar ist und der Stanzstempel durch die Ausnehmung im Schlitten (14) hindurch in Zusammenwirken mit der Matrize (22) aus der Normkarte eine Minichipkarte wenigstens teilweise ausstanzt.

## Claims

1. A test head for detecting the position of the contact surfaces of a chip card having an embedded semiconductor chip, as to their agreement with a tolerance window defined by a standard, in particular the international standard ISO 7816/2, characterized by a plate (12) made of electrically insulating material in which electrically conductive contact pins (3 to 10) are disposed in such a way as to touch with their tips at least two points of at least one contact surface (C1 to C8), at least one of the points of contact being located in the edge area of the tolerance window according to the standard, and a test voltage applied to the contact pins (3 to 10) indicates a current flow between the contact pins when the tips of the contact pins are resting on the contact surface to be tested.

2. The test head of claim 1, characterized in that the contact pins (3 to 10) are guided springily in the plate.

3. The test head of either of claims 1 and 2, characterized in that the arrangement of the contact pins (3 to 10) is such that the middle and two opposite edges or corners are testable.

4. The test head of claim 3, characterized in that the contact pins (3 to 10) are disposed along a straight line.

5. The test head of either of claims 1 and 2, characterized in that the arrangement of the contact pins (3 to 10) is such that three corners and the middle of a contact surface are testable.

6. The test head of either of claims 1 and 2, characterized in that the arrangement of the contact pins (3 to 10) is such that four corners and the middle of a contact surface are testable.

7. The test head of any of claims 1 to 6, characterized in that the arrangement of the contact pins (3 to 10) is such that two or more contact surfaces are testable simultaneously with the contact pins.

8. The test head of claim 7, characterized in that the arrangement of the contact pins is such that all eight contact surfaces according to the standard ISO 7816/2 can be tested simultaneously.

9. Use of the test head of any of claims 1 to 8 for detecting the position of contact surfaces as to their agreement with a tolerance window defined by a standard, in particular the standard ISO 7816/2.

10. Use of the test head of any of claims 1 to 8 for positioning the contact surfaces of a semiconductor chip embedded in a carrier for dimensionally accurate further processing of the carrier, in particular punching of the outer edges.

11. A method for producing a standard card having an embedded semiconductor chip whose contact surfaces are precisely spaced, within certain tolerances, from the outer edges of the card, characterized in that the contact surfaces of the semiconductor chip embedded in a carrier material are adjusted relative to a punching die by means of the test head of any of claims 1 to 8 in such a way that they are at a predefined distance from the cutting edges of the punching die, and the punching is performed in this adjusted position of the carrier material.

12. The method of claim 11, characterized in that the carrier material is a multicopy sheet or strip.

13. A method for producing a mini chip card having an embedded semiconductor chip from a standard card, whereby the position of the contact surfaces relative to at least three reference points on the outer edges of the mini chip card is precisely defined within certain tolerances, characterized in that the contact surfaces of the semiconductor chip embedded in the standard card are adjusted relative to a punching die by means of the test head of any of claims 1 to 8 in such a way that they are at a predefined distance from the cutting edges of the punching die, and the punching of the mini chip card is performed in this adjusted position of the standard card.

14. The method for producing a mini chip card of claim 13, characterized in that the punching is not performed completely, so that the mini chip card remains connected with the standard card by thin, easily removable bars.

15. The method for producing a mini chip card of claim 13, characterized in that the standard card is punched out of a carrier material, and the edges of the mini chip card are simultaneously prepunched, without any change in the position of the carrier material relative to the punching die, in such a way that the mini chip card remains connected with the standard card via thin, easily removable bars.

16. The method for producing a mini chip card of either of claims 14 and 15, characterized in that the bars are punched out in such a way that the contour of the edges of the mini chip card in the area of the punched out bars is substantially concave.

17. A standard card having an embedded mini chip card and contact surfaces for communication and power supply, whereby the position of the contact surfaces relative to at least three reference points on the outer edges of the mini chip card is precisely defined within certain tolerances, characterized in that the mini chip card is connected with the parallel-edged standard card of greater surface area via at least one easily severable bar area located on the periphery of the mini chip card and not located in the area of the reference points, whereby the position of the contact surfaces-relative to the outer edges of the standard card is within the tolerance zone defined by a standard, in particular the international standard ISO 7816/2.

18. The standard card of claim 17, characterized in that the bar area is designed so as to be easily broken out or punched out.

19. The standard card of claim 18, characterized in that the bar area has a predetermined breaking point.

20. The standard card of claim 19, characterized in that the predetermined breaking point is a weakening of the material, in particular perforation, produced by a laser beam.

21. An apparatus for producing a mini chip card by the method of claim 13, characterized in that it has a slide (14) in which a standard card (11) can be fixed, positioned by stop means (15, 16), a test head (19) with contact pins for detecting the position of the contact surfaces according to any of claims 1 to 6, whereby the relative position of the test head (19) and slide (14) is adjustable biaxially, a die-plate (22) disposed above the slide (14), and a stamping punch (23) disposed below the slide (14) that has a predefined position relative to the test head and can penetrate a recess in the slide, whereby after the standard card or the slide (14) has been adjusted relative to the die-plate (22) the test head (19) can be moved back and the stamping punch at least partly punches out a mini chip card from the standard card through the recess in the slide (14) in cooperation with the die-plate (22).

## Revendications

1. Tête de test pour la détermination de la position des surfaces de contact d'une carte à puce avec une puce à semi-conducteurs rapportée, pour vérifier sa conformité à des fenêtres de tolérance définies par une norme, en particulier par la norme ISO 7816/2, caractérisée par une plaque (12) en un matériau électriquement isolant, dans laquelle des broches de contact électriquement conductrices sont disposées, de telle sorte qu'elles entrent en contact par leur pointe avec au moins deux points d'au moins une surface de contact (C1-C8), l'une au moins des broches de contact se trouvant dans la zone du bord de la fenêtre de tolérance selon la norme, et en ce qu'une tension de test appliquée aux broches de contact (3-10) est représentative du courant s'écoulant entre les broches de contact lorsque les pointes de broches de contact se trouvent sur les surfaces de contact à tester.

2. Tête de test selon la revendication 1, caractérisée en ce que les broches de contact (3 - 10) sont guidées élastiquement dans la plaque.

3. Tête de test selon la revendication 1 ou 2, caractérisée en ce que la disposition des broches de contact (3 - 10) est telle que le centre et deux arêtes ou coins opposés sont susceptibles d'être testés.

4. Tête de test selon la revendication 3, caractérisée en ce que les broches de contact (3 - 10) sont disposées le long d'une ligne droite.

5. Tête de test selon la revendication 1 ou 2, caractérisée en ce que la disposition des broches de contact (3 - 10) est telle que trois coins et le milieu de chacune des surfaces de contact sont susceptibles d'être testés.

6. Tête de test selon la revendication 1 ou 2, caractérisée en ce que la disposition des broches de contact (3 - 10) est telle que quatre coins et le milieu de chacune des surfaces de contact sont susceptibles d'être testés.

7. Tête de test selon l'une des revendications 1 à 6, caractérisée en ce que la disposition des broches de contact (3 - 10) est telle qu'au moins deux surfaces de contact sont simultanément susceptibles d'être testées au moyen des broches de contact.

8. Tête de test selon la revendication 7, caractérisée en ce que la disposition des broches de contact est telle que les huit surfaces de contact selon la norme ISO 7816/2 sont susceptibles d'être testées simultanément.

9. Utilisation de la tête de test selon l'une des revendications 1 à 8, pour la détermination de la position des surfaces de contact, pour vérifier leur conformité à une fenêtre de tolérance définie par une norme, en particulier par la norme ISO 7816/2.

10. Utilisation d'une tête de test selon l'une des revendications 1 à 8, pour le positionnement des surfaces de contact d'une puce à semi-conducteur incorporée sur un support pour un traitement ultérieur mesuré avec précision, en particulier pour l'estampage ou le poinçonnage des arêtes extérieures du support.

11. Procédé de fabrication d'une carte selon une norme, présentant une puce à semi-conducteurs rapportée, et dont les surfaces de contact présentent une distance précise dans des tolérances définies, par rapport aux bords de la carte, caractérisé en ce que les surfaces de contact d'une puce à semi-conducteurs incorporée dans un matériau de support sont ajustées par rapport à un outil de poinçonnage ou d'estampage au moyen d'une tête de test selon l'une des revendications 1 à 8, de telle sorte que les surfaces de contact présentent une distance définie par rapport à la coupe de l'outil de poinçonnage, et que le poinçonnage ou l'estampage de la carte selon la norme s'effectue dans cette position ajustée de matériau de support.

12. Procédé selon la revendication 11, caractérisé en ce que le matériau de support est un arc ou une bande réutilisables.

13. Procédé de fabrication d'une minicarte à puce présentant une puce à semi-conducteur rapportée, à partir d'une carte selon une norme, dans laquelle la position des surfaces de contact est définie avec précision dans une tolérance définie, par rapport à au moins trois points de référence de l'arête extérieure de la minicarte à puce, caractérisé en ce que les surfaces de contact de la puce à semi-conducteur incorporé dans la carte selon la norme sont ajustées par rapport à un outil de poinçonnage ou d'estampage au moyen d'une tête de test, selon l'une des revendications 1 à 8, de telle sorte que les surfaces de contact présentent une distance définie par rapport à la coupe de l'outil de poinçonnage et que le poinçonnage ou l'estampage de la minicarte à puce s'effectue dans cette position ajustée de la carte selon une norme.

14. Procédé de fabrication d'une minicarte à puce selon la revendication 13, caractérisé en ce que le poinçonnage ou l'estampage n'est pas complètement effectué, de telle sorte que la minicarte à puce reste lié à la carte selon la norme par des traverses fines et facilement séparables.

15. Procédé de fabrication d'une minicarte à puce selon la revendication 13, caractérisé en ce que la carte selon la norme est poinçonnée ou estampée dans un matériau de support, et en ce que les bords de la minicarte à puce sont en même temps pré-poinçonnés ou pré-estampés en maintenant la position du matériau de support par rapport à l'outil de poinçonnage ou d'estampage, de telle sorte que la minicarte à puce reste reliée à la carte selon la norme par des traverses fines et facilement séparables.

16. Procédé de fabrication d'un minicarte à puce selon la revendication 14 ou 15, caractérisé en ce que les traverses sont poinçonnées ou estampées de telle sorte que le contour des bords de la minicarte à puce présente une structure sensiblement concave au voisinage des traverses estampées.

17. Carte selon une norme présentant une minicarte à puce rapportée et des surfaces de contact pour la communication et l'alimentation en énergie, la position des surfaces de contact étant définie avec précision dans des tolérances définies par rapport à au moins trois points de référence du périmètre de la minicarte à puce, caractérisée en ce que la minicarte à puce est reliée à la carte selon la norme, qui a des arêtes parallèles et une surface plus importante, par au moins une zone de traverse facilement séparable se trouvant au périmètre de la minicarte à puce, la position des surfaces de contact par rapport aux arêtes de la carte selon la norme se trouvant dans la plage de tolérance définie par une norme, en particulier par la norme ISO 7816/12.

18. Carte selon une norme, selon la revendication 17, caractérisée en ce que la zone de traverse est constituée de sorte à être facilement brisable ou facilement poinçonnable.

19. Carte selon une norme, selon la revendication 18, caractérisée en ce que la zone de traverse présente un lieu de rupture cible.

20. Carte selon une norme, selon la revendication 19, caractérisée en ce que le lieu de rupture cible est constitué par un affaiblissement du matériau obtenu par rayon laser, en particulier des perforations.

21. Dispositif de fabrication d'une minicarte à puce selon le procédé de la revendication 13, caractérisé en ce qu'il présente une fente 14, dans laquelle une carte selon une norme 11 est positionnée et susceptible d'être fixée par des butées d'arrêt (15, 16) et en outre une tête de test (19) présentant des broches de contact pour la détermination de la position d'une surface de contact selon l'une des revendications 1 à 6, la position relative de la tête de test (19) et de la fente (14) étant ajustable selon deux axes, dispositif présentant en outre une matrice (22) disposée au-dessus de la fente (14) et un poinçon (23) disposé sous la fente (14), dont la position par rapport à la tête de test est définie, et qui peut avancer à travers une ouverture dans la fente, de telle sorte qu'après ajustement de la carte selon une norme ou de la fente (14) par rapport à la matrice (22), la tête de test (19) puisse être retirée et le poinçon puisse poinçonner au moins partiellement une minicarte à puce dans la carte selon une norme, à travers l'ouverture en rentrant en contact avec la matrice (22) à travers l'ouverture dans la fente (14).
